(19) Europäisches Patentamt European Patent Office Office européen des brevets

(11) **EP 3 704 918 B1**

(12) **EUROPEAN PATENT SPECIFICATION**

(45) Date of publication and mention
of the grant of the patent:
**08.12.2021 Bulletin 2021/49**

(51) Int Cl.:
*H04W 74/08* (2009.01)     *H04W 36/08* (2009.01)

(21) Application number: **18874392.6**

(22) Date of filing: **01.11.2018**

(86) International application number:
**PCT/CN2018/113537**

(87) International publication number:
**WO 2019/085977 (09.05.2019 Gazette 2019/19)**

(54) **METHOD AND APPARATUS FOR RADIO RESOURCE EVALUATION AND MANAGEMENT, DATA MEMORY, DATA CARRIER**

VERFAHREN UND VORRICHTUNG ZUR FUNKRESSOURCENAUSWERTUNG UND -VERWALTUNG, DATENSPEICHER, DATENTRÄGER

PROCÉDÉ ET APPAREIL D'ÉVALUATION ET DE GESTION DE RESSOURCES RADIO, MÉMOIRE DE DONNÉES ET SUPPORT DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2017 US 201762580202 P**

(43) Date of publication of application:
**09.09.2020 Bulletin 2020/37**

(73) Proprietor: **GUANGDONG OPPO MOBILE TELECOMMUNICATIONS CORP., LTD.**
**Wusha, Chang'an**
**Dongguan,**
**Guangdong 523860 (CN)**

(72) Inventors:
• **ISOKANGAS, Jari Jaakko**
**33240 Tampere (FI)**
• **YANG, Ning**
**Dongguan**
**Guangdong 523860 (CN)**
• **LEI, Yixue**
**Dongguan**
**Guangdong 523860 (CN)**

(74) Representative: **RGTH**
**Patentanwälte PartGmbB**
**Neuer Wall 10**
**20354 Hamburg (DE)**

(56) References cited:
**WO-A1-2015/135203     WO-A1-2017/178697**
**US-A1- 2009 303 965**

• **ZTE CORPORATION ET AL: "RACH beam selection for handover access", 3GPP DRAFT; R2-1710442_RACHBEAMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech republic; 20171009 - 20171013 8 October 2017 (2017-10-08), XP051342487, Retrieved from the Internet: URL:http://www.3gpp.org/ftp/Meetings_3GPP_ SYNC/RAN2/Docs/ [retrieved on 2017-10-08]**
• **HUAWEI ET AL: "Beam selection during handover", 3GPP DRAFT; R2-1710263 BEAM SELECTION DURING HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 8 October 2017 (2017-10-08), XP051342312, Retrieved from the Internet: URL:http://www.3gpp.org/ftp/Meetings_3GPP_ SYNC/RAN2/Docs/ [retrieved on 2017-10-08]**

**(Cont. next page)**

- Chris Callender ET AL: "Mobility" In: "LTE for UMTS : OFDMA and SC-FDMA based radio access", 16 January 2009 (2009-01-16), JOHN WILEY & SONS, LTD., UNITED KINGDOM, XP055225959, ISBN: 978-0-470-99401-6 pages 165-180, DOI: 10.1002/9780470745489.ch7, * Paragraph "7.2.2.1 Intra-frequency and Equal Priority Reselections" *
- MEDIATEK INC: "RACH during Handover", 3GPP DRAFT; R2-1708048 RACH DURING HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051317958, Retrieved from the Internet: URL:http://www.3gpp.org/ftp/Meetings_3GPP_SYNC/RAN2/Docs/ [retrieved on 2017-08-20]
- 3RD GENERATION PARTNERSHIP PROJECT; TECHNICAL SPECIFICATION GROUP RADIO ACCESS NETWORK (Release 15): "NR; NR and NG-RAN Overall Description", 3GPP TS 38.300 V1.0.1, 31 October 2017 (2017-10-31), XP055614909,

**Description**

**PRIOR ART**

In modern cellular systems, like LTE or LTE-A (Long Term Evolution, Long Term Evolution Advanced) and 5G NR (5th generation New Radio) in the future, a handover procedure is used to disconnect a user equipment (UE) from the currently used radio resources of the current (serving) network node and to connect UE with new radio resources from new (target) network node.

Before UE can start using new radio resources allocated from target network (NW) node, synchronization and random-access procedures are needed. After UE has been synchronized with target NW node, it is able to receive and transmit bits between itself and the NW node. It then can start the random- access procedure towards the target cell.

A random access procedure on a random access channel (RACH) after synchronization can be either contention based or contention free, depending on whether common or dedicated RACH resources are used for the access procedure. The Physical RACH (PRACH) resources are identified by time (subframe), frequency and preamble sequence. Common PRACH resource configuration is broadcasted in each cell using system information messages, e.g. system information blocks (SIB) SIB1 or SIB2, and these broadcasted resources can be used by any UE which tries to access to the cell. According to simple statistics this will lead to a situation where several UEs select same PRACH resources for accessing the target cell such that there will be a competing situation between UEs using same resources. If several UEs try to access with same PRACH resources, one will succeed and others need to select new resources and try again.

During the handover procedure, it is also possible that the target NW node provides dedicated PRACH resource configuration to certain UE to be used for a contention free access. This should allow faster and more reliable access to the target cell.

In LTE and LTE-A the dedicated PRACH configuration during handover procedure is provided on cell level. The target cell has been selected by the target NW node based on UE radio resource management (RRM) measurements.

In 5G NR, the PRACH configuration can be provided on beam level. One beam used in 5G NR could cover areas much smaller than a cell, and in one cell there can be several transmission points (TRP), and one TRP can handle several beams. Accordingly, under LTE and LTE-A, several dedicated PRACH resources need to be provided to the UEs during handover procedure.

One approach is that the targeted next generation NodeB (gNB) can allocate beam level dedicated RACH resources which are associated either with synchronization signal (SS) blocks (SSB) or with a Channel State Information Reference Signal (CSI-RS), and this dedicated RACH resource information (configuration) can be passed to UE in Handover Command message (RRCConnectionReconfiguration) according to TS 36.331 and TS 38.331 during the handover procedure, see also TS 38.300. Target gNB should also include common RACH resource configuration valid for accessing to the target cells.

The paper " Discussion on how the dedicated RACH resources should be prioritized", 3GPP TSG RAN WG2 #99bis R2-1711766, published in conjunction with the 3GPP TSG RAN WG2 #99bis meeting in Prague, Czech Republic, 9th - 13th October 2017, proposes that in 5G NR a UE should keep on measuring the beam quality to verify whether the dedicated RACH resources is suitable after receiving the HO command. UE should attempt the suitable dedicated RACH, and UE should fall back to use common RACH resource only if there are no suitable dedicated RACH resources.

It is thus proposed that UE prioritizes suitable beams with dedicated PRACH resources, if configured, over common PRACH resources. A suitable beam is defined as a beam that (a) is identified either with SSB or CSI-RS, (b) has dedicated RACH resources allocated and (c) has measured beam quality, such as reference signal received power value (RSRP) and/or reference signal received quality value (RSRQ) above the threshold value indicated by the NW in a handover (HO) command message. It is considered that, as long as there is any suitable beam with dedicated resources available, UE is not allowed to access with common resources.

However, as the radio condition could change quite rapidly, especially in small cell environment due to beam sweeping and UE mobility, it cannot be assured that it would always be beneficial for UE or even the entire network trying to access the target cell only with beams with dedicated resources. The RRM conditions could have changed after dedicated resources were allocated. And even if the quality level is still above the threshold, there could be other beams which have significantly better quality than beams with dedicated resources so that strictly using beams with dedicated resources may not always be the most effective approach in view of network resource consumption, latency and the like. For example, just after the handover additional beam/cell change can occur, for example when UE is moving away from beams with dedicated resources.

In that case it is quite likely that UE need to perform another beam/cell change immediately after HO to a beam with dedicated resources has been finalized. These additional beam/cell changes would lead to decreased end user and system performance.

More generally speaking, there is a need for comparatively evaluating quality of dedicated RACH resources vs. quality of common RACH resources. This may be desired, for example, for obtaining meaningful network statistics or for providing adaptive network settings. Accordingly, also without the particular target of managing a handover, the quality relation amongst dedicated and common RACH resources is of interest.

Related technologies are known from the documents entitled R2-1710442, "RACH beam selection for handover access" of ZTE Corporation, R2-1710263, "Beam selection during handover" of Huawei, "LTE for UMTS : OFDMA and SC-FDMA based radio access", ISBN No: 978-0-470-99401-6, of Chris Callender et al, and R2-1708048, "RACH during Handover" of MediaTek Inc..

## SHORT DESCRIPTION OF THE INVENTION

It is the object of the invention to provide a radio resource evaluation method capable of providing a flexible and adapted comparative evaluation of dedicated and common RACH resources.

The features of the method and apparatus according to the present disclosure are defined in the independent claims, and the preferable features according to the present invention are defined in the dependent claims.

## BRIEF DESCRIPTION OF THE DRAWINGS

In the following, further aspects of the invention will be described with reference to the attached drawings.

Fig. 1 is a plan view on a radio cell in a certain physical layout.
Fig. 2 is a flow diagram of a method.
Fig. 3 shows a map on possible relations amongst assessed quality metrics and a set quality offset.

## DETAILED DESCRIPTION

In the following, features and aspects of the invention are described also in relation to a handover procedure. However, as far as possible, these features shall also be understood as being useful or used in a broader comparative radio resource evaluation technique independent of handovers. In an embodiment, the latter may be understood as a preparatory stage of the former.

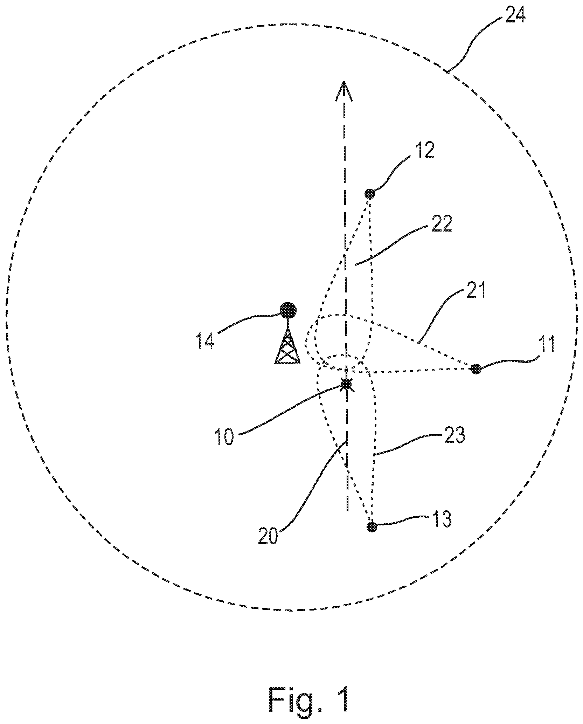

Fig. 1 shows a scenario in a plan view in which the invention exhibits its effects. It can be understood as a plan view of a cell. In the cell are various nodes 11, 12, 13, 14. Some or all of them may be stationary. Nodes 11, 12 and 13 are adapted to send out beams 21, 22, 23, i.e. directed radio transmission, whereas node 14 sends undirected as indicated by dashed circle 24, called "broadcast". 10 indicates a UE having or requiring radio connection to the network. 20 indicates its trajectory.

A skilled person understands that the shown boundaries of beams 21, 22, 23 and broadcast 24 of the various covered regions are not hard boundaries but can be understood as kind of thresholds in which reasonable radio quality can be expected.

It is assumed that user equipment (UE) 10 is about to leave beam 23 and would get into the reach of beams 21 and 22. It is further assumed that beam 21 has dedicated RACH resources, whereas beam 22 has common RACH resources. In the shown arrangement the situation is such that UE 10 will briefly cross beam 21 and will remain longer time in beam 22. A handover is imminent as UE 10 is about to leave beam 23. The presently serving node 13 can initiate the handover, acting as a source node. It may be a gNB ("next generation nodeB"). The same applies to nodes 11 and 12.

After initiation/commanding, a synchronization and informing procedure may follow for providing UE 10 with relevant information and synchronizing it with a potential target node, which may again be a gNB, such as node 11 or node 12.

After synchronizing and informing, a determination follows as to which of the beams 21 or 22 from nodes 11 or 12 to use.

In the following, node 11 will be addressed as "first node", node 12 will be addressed as "second node". Beam 21 will be addressed as "first beam", beam 22 will be addressed as "second beam".

A default setting may be that UE 10 selects first beam 21 because it has dedicated RACH resources. But irrespective of such a potential default setting, a decision procedure amongst first beam 21 and second beam 22 may follow.

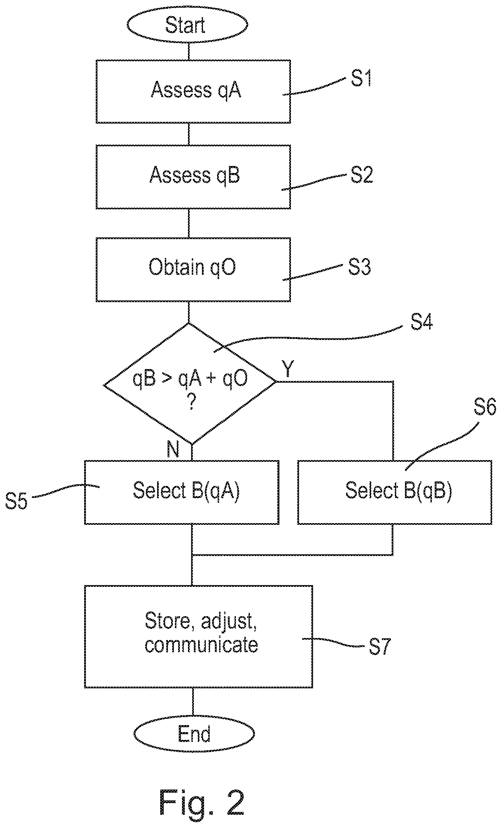

The related method steps are schematically shown in Fig. 2. After initiation of the determination procedure, in step S1 the quality qA of the first beam 21 with dedicated RACH resources is assessed. This may be made by one of the above-mentioned methods.

In step S2, the quality metrics qB of a resource on the second beam 22 is assessed. Again, this assessment may be made in accordance with the mentioned methods and aspects.

As said earlier, the quality assessments for quality metrics qA and qB may include technical aspects and organizational aspects in the sense of technical quality and organizational quality. In the scenario shown in Fig. 1, the second beam 22 has the organizational advantage over beam 21 that UE 10 will most likely remain longer in beam 22 than in beam 21 because beam 22 covers more of a predicted trajectory. Accordingly, regarding quality assessment, on the one hand side the technical aspects can be quantified. But likewise, organizational aspects as mentioned above can be quantified. The various individual quantifications can finally be integrated into one particular quality metrics in an agreed format.

The two quality metrics qA and qB are determined, possibly after suitable conversion/s, in a comparable format/coding. For example, they may be expressed as a signal-to-noise ratio (S/N ratio). It is to be understood that if other than technical aspects are computed into the quality metrics, the numeric format may be that of a S/N ratio, but the number is a summarizing container of various aspects.

In step S3, a set quality offset qO is obtained. It may a predetermined and prestored value, or it may be an up-to-date determined value. It may be a fixed, constant value or may be a relative value relative to qA or qB. In its format, possibly after a conversion, it is comparable to the metrics qA and qB. The set quality offset metrics qO may be held locally and retrieved from a local memory cell or may be received from external and may temporarily be stored as long as needed.

It is pointed out that the order of steps S1, S2 and S3 as shown in Fig. 2 is not compulsory. The order amongst these steps may be different.

Once the mentioned metrics qA and qB and the set offset qO are available, it is determined whether the quality metrics qB relating to the common RACH resources second beam 22 exceeds the quality of the dedicated RACH resources first beam 21 by at least the set quality offset metrics qO. This determination is made in step S4. The query of step S4 can be expressed as the following formula:

$$qB > qA + qO$$

or re-written into

$$qB - qA > qO$$

If it is found that the quality metrics qB of the common RACH resources beam 22 exceeds the quality metrics qA of the dedicated RACH resources beam 21 by at least the set quality offset metrics qO ("yes" in S4) the second beam 22 with common RACH resources corresponding to quality metrics qB is selected for use. Otherwise, the first beam 21 with quality metrics qA and dedicated RACH resources is selected. These selections are made in steps S5 and S6, respectively, by generating a corresponding marker and/or by making right away the required settings for using the respective beam. The selection made in these steps S5, S6 will overwrite former selections or potential default settings.

Instead of a difference qB - qA of the assessed metrics also their ratio qB/qA can be used. The set quality offset metrics qO is then adapted to such another relation. It may be 1 or larger than 1.

In step S7, the selection can be stored as a related marker. If to be used immediately, the radio hardware can adjust to the selection and adjust to the selected beam. Likewise, if the selection is to be made elsewhere, the selection result can be communicated.

In actual use, the determination made amongst first and second beams 21 or 22 leads to the selected beam 21 or 22 being used for the following RACH procedure. It may also be used thereafter. This is per se known and will not be described here.

As said earlier, the flow shown in Fig. 2 may be triggered by a handover command relating to an imminent handover or may be triggered by other circumstances in a kind of precautionary manner.

It is preferred that the quality metrics assessments in relation to metrics qA, qB in steps S1 and S2 are made in UE 10 because UE 10 sees the true and actual radio situation.

Obtaining the set quality offset qO in step S3 is as simple as reading a memory cell holding a predetermined and prestored value. But likewise, it is more complex. The set quality offset qO, for example, is set in accordance with changing network policies, load balancing requirements and the like. It is determined in a stationary device having knowledge of such requirements and then is communicated to a deciding entity such as UE 10. Vice versa, UE 10 performs the assessments of steps S1 and S2 and communicates the results to a stationary device.

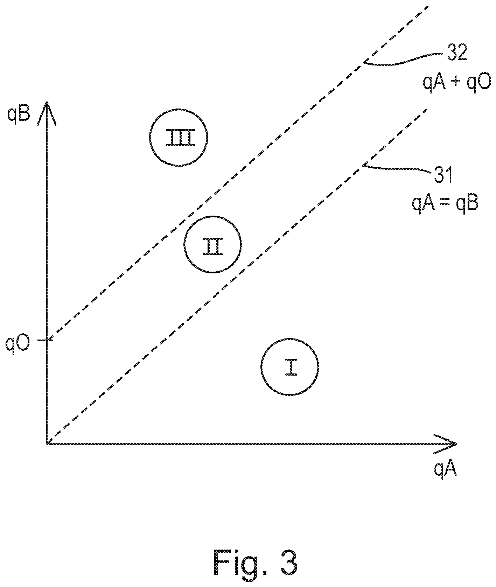

Fig. 3 shows the relation amongst the quality metrics qA, qB and the set quality offset metrics qO. The abscissa shows quality metrics qA of the beam with dedicated RACH resources or of the resource on that beam, the ordinate shows metrics qB of the beam with common RACH resources or of the resource on that beam. Line 31 shows where both are the same. Line 32 is offset against 31 by the set quality offset qO which is here assumed to be a constant value. Said lines 31 and 32 define regions I, II and III. In the region I, where qA for the dedicated RACH beam 21 is larger than qB for the common RACH beam 22, the dedicated RACH resources on beam 21 is selected. In region II, the quality metrics qB of the common RACH resources on beam 22 is larger than qA of the dedicated RACH resources beam 21. But it does not exceed it by the set quality offset qO. In other words, the decision in S4 of Fig. 4 would be "no" and accordingly still the dedicated RACH resources beam 21 in Fig. 1 will be selected.

In region III, the quality metrics qB of the common RACH resources on beam 22 exceeds the quality metrics qA of the dedicated RACH resources on beam 21 by the set quality offset qO or more. Then, the common RACH resources on beam 22 is selected and determined to be used. This corresponds to the "yes" decision in step S4 of Fig. 2.

Through the mentioned decision scheme, the dedicated RACH resources beam is prioritized over the common RACH resources beam in that it is selected for use even when exhibiting certain lower quality metrics. From a view point of overall network performance this may well be desirable because irrespective of the quality determinations, a dedicated RACH resources beam is less likely to encounter access conflicts with other UEs so that by the preference of the dedicated RACH resources beam, access conflicts and related signaling overhead and latency are avoided. To the contrary, if quality of the common RACH resources beam is much higher, as reflected by the set quality offset metrics qO, than that of a dedicated RACH resources beam, the method allows to use the common RACH resources beam, again in an attempt to increase overall network performance and user satisfaction.

As far as a method for comparative radio resource evaluation in mobile telecommunication is concerned, it comprises assessing a first quality metrics qA of an available dedicated RACH resource, assessing a second quality metricsqB of an available common RACH resource, obtaining a set quality offset metrics qO larger than zero, making a second determination if the second quality metrics exceeds the first by at least said set quality offset metrics qO, and otherwise making a first determination.

A further method for comparative radio resource evaluation in mobile telecommunication comprises assessing a first quality metrics qA of dedicated RACH resources on a first beam, assessing a second quality metrics qB of common RACH resources on a second beam, obtaining an actual quality offset metrics qD amongst said assessed quality metrics qA, qB, and making determinations in accordance with said actual quality offset metrics qD. Said actual quality offset metrics qD may be obtained as a difference (qD = qB - qA) or as a ratio (qD = qB/qA) of said assessed = measured metrics qA, qB, or as another suitably scaled and formatted quantity relating to said assessed metrics qA, qB.

Said determinations may simply be to use and/or store and/or transmit the respective data as a data tuple, possibly for later evaluation or other use. They may be assessed, determined, stored, transmitted and evaluated periodically or triggered by certain events. Such data tuple may contain said first and/or second quality metrics qA, qB, their actual offset metrics qD (e. g. determined as qA-qB or qA/qB) and/or the obtained set quality offset metrics qO, date, time, location, possibly associated network resources and settings. Said data tuple may be used for immediate or later local or remote evaluation, e. g. for obtaining meaningful statistics, or may be used for immediate further measures or procedures such as the continuous adaptive or learning setting of network configuration parameters, the reconfiguration with sync, the managing of handovers or the like. The data not including the set quality offset metrics qO may be used for establishing the set quality offset metrics qO.

The various comparative evaluation results may be used for establishing comparative quality statistics for further use. Such statistics may be resolved in time and/or resolved in space/location/cell/beam. They can be established at an appropriately equipped station that receives the evaluation results. They can be established from the data tuple prepared and possibly transmitted as described above. The statistics can be used for setting network parameters, possibly time-dependent and/or depending on location/cell/beam.

A corresponding apparatus for comparative radio resource evaluation and radio resource management is also provided.

Features described in this specification claims shall be deemed combinable with other also if such a combination is not explicitly described, to the extent that the combination is technically feasible. Features described in a certain context or embodiment or figure or claim shall be considered separable from this context or embodiment or claim or figure, to the extent that it is technically feasible, and shall be considered combinable with other figures or claims or embodiments or context, to the extent that it is technically feasible. Descriptions of method aspects shall be considered also as a description of related implementing means or devices, and vice versa.

LIST OF REFERENCE NUMERALS

| 10 | user equipment - UE |
| 11, 12, 13, 14 | stationary nodes |
| 20 | trajectory of user equipment |
| 21 | beam with dedicated RACH resources |
| 22 | beam with common RACH Resources |
| 23 | beam |
| 24 | broadcast area |
| S1 - S7 | method steps |
| 31,32 | lines in diagram |
| qA | quality metrics of dedicated RACH resources beam |
| qB | quality metrics of common RACH resources beam |
| qD | actual quality offset metrics |
| qO | set quality offset metrics |

**Claims**

1. Method for comparative radio resource evaluation, comprising the steps of:

assessing, by a user equipment (10), quality metrics of dedicated random access channel, RACH, resources carried by a first beam (21) and assessing quality metrics of common RACH resources carried by a second beam (22), comparatively evaluating, by the user equipment (10), said assessed quality metrics of said resources, and storing or transmitting, by the user equipment (10), the comparative evaluation result or taking further measures in accordance with said comparative evaluation result, wherein said assessing comprises:

assessing (S1) a first quality metrics qA of dedicated RACH resources carried by the first beam (21), assessing (S2) a second quality metrics qB of common RACH resources carried by the second beam (22),

said comparative evaluation comprises:

obtaining (S3) a set quality offset metrics qO, and

if the second quality metrics qB exceeds said first quality metrics qA by at least said set quality offset metrics qO, making a second determination (S6), and otherwise making a first determination (S5),

wherein the first determination or the second determination overwrites a default determination to use the dedicated RACH resources, wherein assessing the first quality metrics and/or the second quality metrics is made selectively by one of a plurality of available quality metric assessment methods and for said first and/or second determination one of plural available quality metrics assessment methods is selected, and a corresponding plurality of available set quality offset metrics qO is provided for a corresponding selection of one of them.

2. The method of claim 1, comprising radio resource management for a handover procedure towards a target node in mobile telecommunication, wherein said radio resource management comprises the steps of:

a.) obtaining said set quality offset metrics qO as a value equal to or larger than zero, and
b.) making said second determination as using the common RACH resources and otherwise making said first determination as using the dedicated RACH resources.

3. The method of one of the preceding claims, wherein the set quality offset metrics qO may be a predetermined absolute value or is a predetermined value relative to the first or the second quality metrics qA, qB, and/or is determined in accordance with network traffic and/or load balancing requirements.

4. The method of one of the preceding claims, wherein the set quality offset metrics qO is communicated from a node towards a user equipment, preferably together with RACH configuration information, preferably in a handover command message, and/or in a broadcast system information message.

5. The method of claim 4, wherein the node is the target node, the set quality offset metrics qO being communicated from a node towards the user equipment together with RACH configuration information in a handover command message and/or in a broadcast system information message.

6. The method according to one of the preceding claims, wherein the first and/or the second quality metrics qA, qB comprises a signal-to-noise, S/N, ratio.

7. The method according to one of the preceding claims, wherein the first quality metrics qA is assessed from synchronization signal blocks, SSB, or from channel state information reference signals, CSI-RS.

8. The method according to one of the preceding claims, wherein the first quality metrics qA and/or second quality metrics qB and/or the set quality offset metrics qO is assessed in accordance with technical qualities and in accordance with other qualities and/or in accordance with a movement of the concerned user equipment in relation to the respective beam, wherein the technical qualities are signal strength and signal quality, and the other qualities is organizational or service qualities.

9. The method according to one of the preceding claims, wherein the second quality metrics qB is assessed as a reference signal received power value, RSRP, and/or as a reference signal received quality value, RSRQ.

10. The method according to one of the preceding claims, configured according to one or more 5G new radio, NR, specifications.

11. The method according to one of the preceding claims, **characterized in that** the determination is triggered by a handover command from a base station (11 - 14) or autonomously by the user equipment (10).

12. The method according to claim 11, **characterized in that** the determination is triggered by a handover command from the base station (11 - 14) or autonomously by the user equipment (10) in accordance with one or more internal states or events or determinations of the user equipment (10).

13. The method according to one of the preceding claims, **characterized in that** the determination is triggered by a handover command from the base station (11 - 14) or autonomously by the user equipment (10) upon reconfiguration with sync, and/or periodically.

14. The method according to one of the preceding claims, **characterized in that** the determination is used in a random access procedure by a user equipment (10) for establishing connectivity with a node (11 - 14) for sending implicit or explicit information from the user equipment (10) to the node (11 - 14) through the selected first beam (21) or second beam (22).

15. A user equipment, UE, for comparative radio resource evaluation in mobile telecommunication, comprising

means for assessing quality metrics qA of dedicated random access channel, RACH, resources carried by a first beam (21) and quality metrics qB of common RACH resources carried by a second beam (22),

evaluation means for making a comparative evaluation amongst said assessed quality metrics, and

means for storing and/or transmitting the comparative evaluation result and/or for taking further measures in accordance with said comparative evaluation result,

wherein said means for assessing comprises:

means for assessing a first quality metrics qA of dedicated RACH resources carried by the first beam (21),

means for assessing a second quality metrics qB of common RACH resources carried by the second beam (22),

said evaluation means for making a comparative evaluation comprises:

means for obtaining a set quality offset metrics qO, and

if the second quality metrics qB exceeds said first quality metrics qA by at least said set quality offset metrics qO, means for making a second determination, and otherwise means for making a first determination,

wherein the first determination or the second determination overwrites a default determination to use the dedicated RACH resources,

wherein assessing the first quality metrics and/or the second quality metrics is made selectively by one of a plurality of available quality metric assessment methods and for said first determination and/or second determination one of plural available quality metrics assessment methods is selected, and a corresponding plurality of available set quality offset metrics qO is provided for a corresponding selection of one of them.

**Patentansprüche**

1.  Verfahren zur vergleichenden Funkressourcenbeurteilung, das die folgenden Schritte umfasst:

Auswerten einer Qualitätsmetrik von dedizierten Direktzugriffskanal(RACH)-Ressourcen, die sich in einem ersten Strahl (21) befinden, und Auswerten einer Qualitätsmetrik von gemeinsam verwendeten RACH-Ressourcen, die sich in einem zweiten Strahl (22) befinden, durch eine Teilnehmereinrichtung (10),

vergleichendes Beurteilen der ausgewerteten Qualitätsmetriken der Ressourcen durch die Teilnehmereinrichtung (10) und

Speichern oder Übertragen des Ergebnisses der vergleichenden Beurteilung oder Ergreifen von weiteren Maßnahmen gemäß dem Ergebnis der vergleichenden Beurteilung durch die Teilnehmereinrichtung (10),

wobei das Auswerten Folgendes umfasst:

Auswerten (S1) einer ersten Qualitätsmetrik qA der dedizierten RACH-Ressourcen, die sich im ersten Strahl (21) befinden,

Auswerten (S2) einer zweiten Qualitätsmetrik qB von gemeinsam verwendeten RACH-Ressourcen, die sich im zweiten Strahl (22) befinden,

die vergleichende Beurteilung Folgendes umfasst:

Erhalten (S3) einer eingestellten Qualitätsversatzmetrik qO und,

wenn die zweite Qualitätsmetrik qB die erste Qualitätsmetrik qA um mindestens die eingestellte Qualitätsversatzmetrik qO überschreitet, Vornehmen einer zweiten Bestimmung (S6) und andernfalls Vornehmen einer ersten Bestimmung (S5),

wobei die erste Bestimmung oder die zweite Bestimmung eine Standardbestimmung zum Verwenden der dedizierten RACH-Ressourcen überschreibt,

wobei das Auswerten der ersten Qualitätsmetrik und/oder der zweiten Qualitätsmetrik selektiv durch eines von einer Vielzahl von verfügbaren Qualitätsmetrikauswertungsverfahren vorgenommen wird und für die erste und/oder die zweite Bestimmung eines von mehreren verfügbaren Qualitätsmetrikauswertungsverfahren ausgewählt wird und eine entsprechende Vielzahl von verfügbaren eingestellten Qualitätsversatzmetriken qO für eine entsprechende Auswahl von einem von ihnen bereitgestellt ist.

2.  Verfahren nach Anspruch 1, das eine Funkressourcenverwaltung für eine Übergabeprozedur zu einem Zielknoten hin bei der mobilen Telekommunikation umfasst, wobei die Funkressourcenverwaltung die folgenden Schritte umfasst:

a.) Erhalten der eingestellten Qualitätsversatzmetrik qO als einen Wert gleich oder größer als null und

b.) Vornehmen der zweiten Bestimmung zum Verwenden der gemeinsam verwendeten RACH-Ressourcen und andernfalls Vornehmen der ersten Bestimmung zum Verwenden der dedizierten RACH-Ressourcen.

3. Verfahren nach einem der vorhergehenden Ansprüche, wobei die eingestellte Qualitätsversatzmetrik qO ein vorbestimmter Absolutwert sein kann oder ein vorbestimmter Wert mit Bezug auf die erste oder die zweite Qualitätsmetrik qA, qB ist und/oder gemäß Netzwerkverkehrs- und/oder Lastausgleichsanforderungen bestimmt wird.

4. Verfahren nach einem der vorhergehenden Ansprüche, wobei die eingestellte Qualitätsversatzmetrik qO vorzugsweise zusammen mit RACH-Auslegungsinformationen, vorzugsweise in einer Übergabebefehlsnachricht und/oder in einer Broadcastsysteminformationsnachricht, von einem Knoten zu einer Teilnehmereinrichtung kommuniziert wird.

5. Verfahren nach Anspruch 4, wobei der Knoten der Zielknoten ist, wobei die eingestellte Qualitätsversatzmetrik qO zusammen mit RACH-Auslegungsinformationen in einer Übergabebefehlsnachricht und/oder in einer Broadcastsysteminformationsnachricht von einem Knoten zur Teilnehmereinrichtung kommuniziert wird.

6. Verfahren nach einem der vorhergehenden Ansprüche, wobei die erste und/oder die zweite Qualitätsmetrik qA, qB ein Signal-Rauschen(S/N)-Verhältnis umfasst.

7. Verfahren nach einem der vorhergehenden Ansprüche, wobei die erste Qualitätsmetrik qA anhand von Synchronisationssignalblöcken, SSB, oder anhand von Kanalzustandsinformationsreferenzsignalen, CSI-RS, ausgewertet wird.

8. Verfahren nach einem der vorhergehenden Ansprüche, wobei die erste Qualitätsmetrik qA und/oder die zweite Qualitätsmetrik qB und/oder die eingestellte Qualitätsversatzmetrik qO gemäß technischen Qualitäten und gemäß anderen Qualitäten und/oder gemäß einer Bewegung der betreffenden Teilnehmereinrichtung mit Bezug auf den jeweiligen Strahl ausgewertet werden, wobei die technischen Qualitäten Signalstärke und Signalqualität sind und die anderen Qualitäten organisatorische oder Dienstqualitäten sind.

9. Verfahren nach einem der vorhergehenden Ansprüche, wobei die zweite Qualitätsmetrik qB als ein Referenzsignalempfangsleistungswert, RSRP, und/oder als ein Referenzsignalempfangsqualitätswert, RSQR, ausgewertet wird.

10. Verfahren nach einem der vorhergehenden Ansprüche, gemäß einer oder mehreren 5G New Radio(NR)-Spezifikationen ausgelegt.

11. Verfahren nach einem der vorhergehenden Ansprüche, **dadurch gekennzeichnet, dass** die Bestimmung durch einen Übergabebefehl von einer Basisstation (11-14) oder autonom durch die Teilnehmereinrichtung (10) ausgelöst wird.

12. Verfahren nach Anspruch 11, **dadurch gekennzeichnet, dass** die Bestimmung durch einen Übergabebefehl von der Basisstation (11-14) oder autonom durch die Teilnehmereinrichtung (10) gemäß einem oder mehreren internen Zuständen oder Ereignissen oder Bestimmungen der Teilnehmereinrichtung (10) ausgelöst wird.

13. Verfahren nach einem der vorhergehenden Ansprüche, **dadurch gekennzeichnet, dass** die Bestimmung durch einen Übergabebefehl von der Basisstation (11-14) oder autonom durch die Teilnehmereinrichtung (10) nach Neuauslegung mit sync und/oder regelmäßig ausgelöst wird.

14. Verfahren nach einem der vorhergehenden Ansprüche, **dadurch gekennzeichnet, dass** die Bestimmung bei einer Direktzugriffsprozedur von einer Teilnehmereinrichtung (10) zum Aufbauen einer Konnektivität mit einem Knoten (11-14) zum Senden von impliziten oder expliziten Informationen von der Teilnehmereinrichtung (10) über den ausgewählten ersten Strahl (21) oder zweiten Strahl (22) an den Knoten (11-14) verwendet wird.

15. Teilnehmereinrichtung, UE, für eine vergleichende Funkressourcenbeurteilung bei der mobilen Telekommunikation, die Folgendes umfasst:

Mittel zum Auswerten einer Qualitätsmetrik qA von dedizierten Direktzugriffskanal(RACH)-Ressourcen, die sich in einem ersten Strahl (21) befinden, und einer Qualitätsmetrik qB von gemeinsam verwendeten RACH-Ressourcen, die sich in einem zweiten Strahl (22) befinden,
Beurteilungsmittel zum Vornehmen einer vergleichenden Beurteilung der ausgewerteten Qualitätsmetriken und
Mittel zum Speichern und/oder Übertragen des Ergebnisses der vergleichenden Beurteilung und/oder Ergreifen von weiteren Maßnahmen gemäß dem Ergebnis der vergleichenden Beurteilung,
wobei die Mittel zum Auswerten Folgendes umfassen:

Mittel zum Auswerten einer ersten Qualitätsmetrik qA der dedizierten RACH-Ressourcen, die sich im ersten Strahl (21) befinden,

Mittel zum Auswerten einer zweiten Qualitätsmetrik qB von gemeinsam verwendeten RACH-Ressourcen, die sich im zweiten Strahl (22) befinden,

wobei die Beurteilungsmittel zum Vornehmen einer vergleichenden Beurteilung Folgendes umfassen:

Mittel zum Erhalten einer eingestellten Qualitätsversatzmetrik qO und,
wenn die zweite Qualitätsmetrik qB die erste Qualitätsmetrik qA um mindestens die eingestellte Qualitätsversatzmetrik qO überschreitet, Mittel zum Vornehmen einer zweiten Bestimmung, und andernfalls Mittel zum Vornehmen einer ersten Bestimmung,

wobei die erste Bestimmung oder die zweite Bestimmung eine Standardbestimmung zum Verwenden der dedizierten RACH-Ressourcen überschreibt,
wobei das Auswerten der ersten Qualitätsmetrik und/oder der zweiten Qualitätsmetrik selektiv durch eines von einer Vielzahl von verfügbaren Qualitätsmetrikauswertungsverfahren vorgenommen wird und für die erste und/oder die zweite Bestimmung eines von mehreren verfügbaren Qualitätsmetrikauswertungsverfahren ausgewählt wird und eine entsprechende Vielzahl von verfügbaren eingestellten Qualitätsversatzmetriken qO für eine entsprechende Auswahl von einem von ihnen bereitgestellt ist.

## Revendications

1. Procédé d'évaluation comparative de ressources radio, comprenant les étapes de :

évaluation, par un équipement utilisateur (10), de mesures de qualité de ressources de canal d'accès aléatoire dédiées, RACH, transportées par un premier faisceau (21) et évaluation de mesures de qualité de ressources RACH communes transportées par un second faisceau (22),
évaluation comparative, par l'équipement utilisateur (10), desdites mesures de qualité évaluées desdites ressources, et
stockage ou transmission, par l'équipement utilisateur (10), du résultat de l'évaluation comparative ou prise de mesures supplémentaires conformément audit résultat de l'évaluation comparative,

ladite évaluation comprenant :

l'évaluation (S1) de premières mesures de qualité qA de ressources RACH dédiées transportées par le premier faisceau (21), l'évaluation (S2) de secondes mesures de qualité qB de ressources RACH communes transportées par le second faisceau (22),

ladite évaluation comparative comprenant :

l'obtention (S3) de mesures de décalage de qualité fixées qO, et
si les secondes mesures de qualité qB dépassent lesdites premières mesures de qualité qA d'au moins lesdites mesures de décalage de qualité fixées qO, réalisation d'une seconde détermination (S6), et sinon réalisation d'une première détermination (S5),

la première détermination ou la seconde détermination remplaçant une détermination par défaut pour utiliser les ressources RACH dédiées, l'évaluation des premières mesures de qualité et/ou des secondes mesures de qualité étant faite sélectivement par l'un d'une pluralité de procédés d'évaluation de mesure de qualité disponibles et pour ladite première et/ou seconde détermination, l'un de plusieurs procédés d'évaluation de mesures de qualité disponibles étant sélectionné, et une pluralité correspondante de mesures de décalage de qualité fixées disponibles qO étant fournie pour une sélection correspondante de l'un d'entre eux.

2. Procédé selon la revendication 1, comprenant une gestion de ressources radio pour une procédure de transfert vers un nœud cible en télécommunication mobile, ladite gestion de ressources radio comprenant les étapes de :

a) obtention desdites mesures de décalage de qualité fixées qO comme une valeur égale ou supérieure à zéro, et
b) réalisation de ladite seconde détermination en utilisant les ressources RACH communes et sinon réalisation de ladite première détermination en utilisant les ressources RACH dédiées.

3. Procédé selon l'une des revendications précédentes, les mesures de décalage de qualité fixées qO pouvant être une valeur absolue prédéterminée ou étant une valeur prédéterminée relative aux premières ou aux secondes mesures de qualité qA, qB, et/ou étant déterminées en fonction du trafic de réseau et/ou des exigences d'équilibrage de charge.

**4.** Procédé selon l'une des revendications précédentes, les mesures de décalage de qualité fixées qO étant communiquées à partir d'un nœud vers un équipement utilisateur, préférablement avec des informations de configuration RACH, préférablement dans un message de commande de transfert, et/ou dans un message d'informations système de diffusion.

**5.** Procédé selon la revendication 4, le nœud étant le nœud cible, les mesures de décalage de qualité fixées qO étant communiquées d'un nœud vers l'équipement utilisateur avec des informations de configuration RACH dans un message de commande de transfert et/ou dans un message d'informations système de diffusion.

**6.** Procédé selon l'une des revendications précédentes, les premières et/ou les secondes mesures de qualité qA, qB comprenant un rapport signal/bruit, S/N.

**7.** Procédé selon l'une des revendications précédentes, les premières mesures de qualité qA étant évaluées à partir de blocs de signaux de synchronisation, SSB, ou de signaux de référence d'informations d'état de canal, CSI-RS.

**8.** Procédé selon l'une des revendications précédentes, les premières mesures de qualité qA et/ou les secondes mesures de qualité qB et/ou les mesures de décalage de qualité fixées qO étant évaluées en fonction de qualités techniques et en fonction d'autres qualités et/ou en fonction d'un mouvement de l'équipement utilisateur concerné par rapport au faisceau respectif, les qualités techniques étant l'intensité et la qualité du signal, et les autres qualités étant des qualités organisationnelles ou de service.

**9.** Procédé selon l'une des revendications précédentes, les secondes mesures de qualité qB étant évaluées comme une valeur de puissance reçue de signal de référence, RSRP, et/ou comme une valeur de qualité reçue de signal de référence, RSRQ.

**10.** Procédé selon l'une des revendications précédentes, configuré selon une ou plusieurs spécifications 5G new radio, NR.

**11.** Procédé selon l'une des revendications précédentes, **caractérisé en ce que** la détermination est déclenchée par une commande de transfert en provenance d'une station de base (11 - 14) ou de manière autonome par l'équipement utilisateur (10).

**12.** Procédé selon la revendication 11, **caractérisé en ce que** la détermination est déclenchée par une commande de transfert en provenance de la station de base (11 - 14) ou de manière autonome par l'équipement utilisateur (10) en fonction d'un ou plusieurs états ou événements internes ou déterminations de l'équipement utilisateur (10).

**13.** Procédé selon l'une des revendications précédentes, **caractérisé en ce que** la détermination est déclenchée par une commande de transfert en provenance de la station de base (11 - 14) ou de manière autonome par l'équipement utilisateur (10) lors d'une reconfiguration avec synchronisation, et/ou de manière périodique.

**14.** Procédé selon l'une des revendications précédentes, **caractérisé en ce que** la détermination est utilisée dans une procédure d'accès aléatoire par un équipement utilisateur (10) pour établir une connectivité avec un nœud (11 - 14) pour envoyer des informations implicites ou explicites de l'équipement utilisateur (10) vers le nœud (11 - 14) au moyen du premier faisceau (21) ou du second faisceau (22) sélectionné.

**15.** Équipement utilisateur, UE, pour l'évaluation comparative de ressources radio en télécommunication mobile, comprenant :

des moyens pour évaluer des mesures de qualité qA de ressources de canal d'accès aléatoire dédié, RACH, transportées par un premier faisceau (21) et des mesures de qualité qB de ressources RACH communes transportées par un second faisceau (22),
des moyens d'évaluation pour réaliser une évaluation comparative entre lesdites mesures de qualité évaluées, et
des moyens pour stocker et/ou transmettre le résultat de l'évaluation comparative et/ou pour prendre des mesures supplémentaires en fonction dudit résultat de l'évaluation comparative, lesdits moyens d'évaluation comprenant

des moyens pour évaluer des premières mesures de qualité qA de ressources RACH dédiées transportées par le premier faisceau (21),
des moyens pour évaluer des secondes mesures de qualité qB de ressources RACH communes transportées par le second faisceau (22),

lesdits moyens d'évaluation pour faire une évaluation comparative comprenant :

des moyens pour obtenir un ensemble de mesures de décalage de qualité fixées qO, et
si les secondes mesures de qualité qB dépassent lesdites premières mesures de qualité qA d'au moins lesdites mesures de décalage de qualité fixées qO, des moyens pour réaliser une seconde détermination, et sinon des moyens pour réaliser une première détermination,

la première détermination ou la seconde détermination remplaçant une détermination par défaut pour utiliser les ressources RACH dédiées, l'évaluation des premières mesures de qualité et/ou des secondes mesures de qualité étant faite sélectivement par l'un d'une pluralité de procédés d'évaluation de mesure de qualité disponibles et pour ladite première et/ou seconde détermination, l'un de plusieurs procédés d'évaluation de mesures de qualité disponibles étant sélectionné, et une pluralité correspondante de mesures de décalage de qualité fixées qO étant fournie pour une sélection correspondante de l'un d'entre eux.

Fig. 1

Start

Assess qA — S1

Assess qB — S2

Obtain qO — S3

S4

qB > qA + qO ?

Y

N

S5 — Select B(qA)

Select B(qB) — S6

Store, adjust, communicate — S7

End

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZTE CORPORATION.** RACH beam selection for handover access. *R2-1710442*
- **HUAWEI.** Beam selection during handover. *R2-1710263*
- **CHRIS CALLENDER.** *LTE for UMTS : OFDMA and SC-FDMA based radio access,* ISBN 978-0-470-99401-6
- **MEDIATEK INC.** RACH during Handover. *R2-1708048*